# EUROPÄISCHE PATENTSCHRIFT

(11) **EP 1 674 236 B1**
(45) Veröffentlichungstag und Bekanntmachung des Hinweises auf die Patenterteilung: **16.07.2008**
(21) Anmeldenummer: 05026199.9
(22) Anmeldetag: 01.12.2005
(51) Int. Cl.: B29C 45/44, D06F 37/24, B29C 33/44, B29L 31/26

(54) **Verfahren zur Herstellung einer Dichtungsmanschette für eine Waschmaschine**
Method for producing a sealing sleeve for a washing machine
Procédé pour produire une manchon d'étanchéité pour une machine à laver

(30) Priorität: 21.12.2004 DE 102004062766
(43) Veröffentlichungstag der Anmeldung: 28.06.2006
(73) Patentinhaber: Miele & Cie. KG, 33332 Gütersloh (DE)
(72) Erfinder: Kretschmer, Ralf, 33378 Rheda Wiedenbrück (DE); Kuka, Thorsten, 33334 Gütersloh (DE)

(56) Entgegenhaltungen:
- DE-A1- 3 738 388
- US-A- 5 881 579
- PATENT ABSTRACTS OF JAPAN Bd. 2000, Nr. 16, 8. Mai 2001 (2001-05-08) & JP 2001 009188 A (SHARP CORP), 16. Januar 2001 (2001-01-16)

## Beschreibung

Die Erfindung betrifft ein Verfahren zur Herstellung einer Dichtungsmanschette zur Anordnung zwischen der Öffnung in der Vorderwand und der Einfüllöffnung im Laugenbehälter einer frontbeschickbaren Waschmaschine, wobei die Öffnung in der Vorderwand nicht fluchtend mit der Einfüllöffnung im Laugenbehälter angeordnet ist, und wobei die Dichtungsmanschette eine Schwingfalte und ein ebenes rohrförmiges Zwischenstück besitzt, welches einem schrägen Zylinder oder einem schrägen Kegelstumpfs entspricht, unter Verwendung einer mehrteiligen Form mit einer Basisplatte, Formkernen und Formringen. Das Verfahren umfasst die Verfahrensschritte
- Einspritzen eines elastomeren Materials in die mehrteilige Form,
- Entfernen einzelner Formkerne und Formringe aus der Form in einer vorgegebenen Reihenfolge nach dem Aushärten oder Vulkanisieren des elastomeren Materials, wobei die Reihenfolge durch die Anordnung der Formkerne und Formringe vorgegeben ist.

Eine derartige Manschette ist beispielsweise aus der Schrift DE 37 38 388 A1 bekannt. Diese Manschette enthält einen ersten Befestigungsabschnitt, einen zweiten Befestigungsabschnitt, ein faltenbalgförmigen Abschnitt und ein rohrförmiges Zwischenstück, die alle einstückig ausgebildet sind. Das rohrförmige Zwischenstück mit dem ersten Befestigungsabschnitt für die Vorderwand ist im wesentlichen rotationssymmetrisch ausgebildet, wobei sich das rohrförmige Zwischenstück im wesentlichen axial zur Querschnittsöffnung des zweiten Befestigungsabschnitts erstreckt.

Im Falle, dass die Einfüllöffnung in der Vorderwand gegenüber der Rotationsachse der Einfüllöffnung des Laugenbehälters achsparallel versetzt oder geneigt ist, wird üblicherweise eine unsymmetrische Manschette verwendet. Bei einer derartigen Manschette entspricht der Verlauf des rohrförmigen Zwischenstücks einem schrägen Zylinder oder einem schrägen Kegelstumpf. Die Herstellung einer solchen unsymmetrischen Manschette erfolgt im Spritzgussverfahren, bei dem eine Kunststoffmasse, vorzugsweise ein elastomerer Kunststoff EPDM, in eine Form gespritzt wird. Eine bereits bekannte Form kann mehrteilig aus folgenden Teilen bestehen:
- einer Basisplatte, zur Bereitstellung der inneren Form des zweiten Befestigungsabschnitts,
- einem unteren äußeren Formring zur Bereitstellung der äußeren Kontur des zweiten Befestigungsabschnitts und der Kontur des äußeren Verlaufs der Schwingfalte,
- einem Faltenformkern für die Bereitstellung der Kontur der Schwingfalte im inneren Bereich,
- einem Faltenformring für die Bestimmung der Kontur der Schwingfalte in einem Teilbereich und der äußeren Form des mittleren Bereichs,
- einem mittleren Formkern, der die innere Kontur des rohrförmigen Zwischenstücks bestimmt,
- einem oberen äußeren Formring zur Bereitstellung der äußeren Kontur des ersten Befestigungsabschnitts und
- einer Abdeckplatte zur Bereitstellung eines Teilbereichs der äußeren Kontur des ersten Befestigungsabschnitts und zur Fixierung aller Formteile im zusammengefügten Zustand.

Der mittlere Formkern der die innere Kontur des mittleren Bereichs bildet, ist hierbei zumindest zweiteilig ausgeführt. Die Herstellung wird in vereinfachter Aufzählung wie folgt durchgeführt:
- Zusammenfügen aller beweglichen Formteile zur Bildung der Form für die Dichtungsmanschette
- Einspritzen der Kunststoffmasse in die Form
- Aushärten bzw. Vulkanisieren der Kunststoffmasse
- Entfernen der Abdeckplatte
- Entfernen des oberen äußeren Formrings
- Entfernen des ersten Teils des mittleren Formkerns
- Entfernen des zweiten Teils des mittleren Formkerns
- Entfernen des äußeren Faltenformrings
- Entfernen des unteren äußeren Formrings
- Lösen des Faltenformkerns von der Basisplatte
- Entnahme der fertigen Manschette durch Abziehen über den faltenbildenden Bereich des Faltenformkerns.

Da der mittlere Formkern aus zumindest zwei Teilen besteht, liegen zwei Stoßstellen im inneren sichtbaren Bereich des ebenen rohrförmigen Zwischenstücks der Dichtungsmanschette, die nach dem Spritzgießvorgang sichtbare Formtrenngrate bilden. Diese Formtrenngrate sind jedoch störend, da sie vom Waschmaschinenbenutzer als Fehler oder Qualitätsmangel wahrgenommen werden. Eine Nachbearbeitung der Dichtungsmanschette zur Entfernung der sichtbaren Formtrenngrate ist nur schwer oder gar nicht möglich. Eine einteilige Ausbildung des mittleren Formkerns ist jedoch nur für symmetrische Dichtungsmanschetten bekannt. Eine Verwendung eines einteiligen mittleren Formkerns für eine unsymmetrische Dichtungsmanschette ist in der bekannten Art und Weise nicht möglich, da einzelne Formteile nach dem Aushärten bzw. Vulkanisieren des Materials nicht mehr entfernt werden können. Hierbei wird der mittlere Formkern in seiner Bewegung in Entformungsrichtung vom Faltenformring gesperrt.

In der JP 2001 009 188 A ist eine Spritzgießform mit zwei Formteilen zur Herstellung einer Dichtungsmanschette offenbart, die einen einteilig ausgeführten mittleren Formkern im Bereich des ebenen rohrförmigen Zwischenstücks besitzt. Dieser Formkern ist jedoch einstückig mit der Basisplatte verbunden und beim Entformen nur mit dieser gemeinsam bewegbar.

Die FR 2137414 A1 zeigt ein Verfahren zur Herstellung eines Kunststoffteils, insbesondere einer Schuhsohle, mit einem zweiteiligen Werkzeug. Hier ist die äußere Kontur des Absatzes in dem oberen Werkzeugteil ausgeformt. Der Hohlraum im inneren des Absatzes wird durch Formteile des unteren Werkzeugs gebildet. Die Formteile sind so gestaltet, dass eine senkrechte Entformung zur Ebene der Schuhsuhle möglich ist. Die äußere Kontur ist schräg zur Senkrechten der Ebene der Schuhsohle ausgeführt. Die Entformungsrichtung folgt dieser Ausrichtung jedoch nicht, so dass das obere Formteil während der Entformung die Schuhsohle mitreißt. Bei einer Dichtungsmanschette könnte eine solch grobe Behandlung zu Rissen oder bleibenden Dehnungen führen, wobei die Dichtigkeit im bestimmungsgemäßen Zustand nicht mehr gewährleistet würde.

Der Erfindung stellt sich somit das Problem, ein Verfahren zur Herstellung einer unsymmetrischen Dichtungsmanschette für eine frontbeschickbare Waschmaschine bereitzustellen, welches die Herstellung einfach gestaltet und für die Dichtungsmanschette eine gleichmäßige und glatte Oberfläche im inneren sichtbaren Bereich eines ebenen rohrförmigen Zwischenstücks aufweist.

Erfindungsgemäß wird dieses Problem durch ein Verfahren mit den Merkmalen des Patentanspruchs 1 gelöst. Vorteilhafte Ausgestaltungen und Weiterbildungen der Erfindung ergeben sich aus den nachfolgenden Unteransprüchen.

Der mit der Erfindung erreichbare Vorteil bestehet darin, dass bei einer im Spritzgussverfahren hergestellten unsymmetrischen einstückigen Dichtungsmanschette zur Anordnung zwischen der Öffnung in der Vorderwand und der Einfüllöffnung im Laugenbehälter einer frontbeschickbaren Waschmaschine, wobei die Öffnung in der Vorderwand nicht fluchtend mit der Einfüllöffnung im Laugenbehälter angeordnet ist , eine gleichmäßige und glatte Oberfläche im inneren Bereich des rohrförmigen Zwischenstücks gewährleistet ist und kein sichtbarer Formtrenngrat entsteht bzw. zurückbleibt. Hierfür wird zur Herstellung eines ersten Befestigungsabschnitts, des rohrförmigen Zwischenstücks, eines faltenbalgförmigen Abschnitts und eines zweiten Befestigungsabschnitts der Dichtungsmanschette eine mehrteilig aufgebaute Form mit zumindest einem einteiligen mittleren Formkern, der die innere Kontur des rohrförmigen Zwischenstücks bestimmt, verwendet. Im zusammengefügten Zustand aller Formteile kann ein Kunststoffmaterial, vorzugsweise ein elastomeres Material wie EPDM, in die Form eingespritzt werden. Nach dem Aushärten oder Vulkanisieren des elastomeren Materials erfolgt zum Entnehmen der Dichtungsmanschette die Entformung, wobei zumindest die Abdeckung, der mittlere Formkern und der Faltenformring in vorbestimmter Reihenfolge auf der Achse der Entformungsrichtung auseinander bewegt werden. Um den oberen mittleren Bereich der Dichtungsmanschette möglichst gleichmäßig und glatt zu gestalten, ist der die innere Kontur des mittleren Bereichs bestimmende mittlere Formkern einteilig ausgeführt. Somit wird eine unerwünschte Gratbildung im sichtbaren Bereich vermieden. Um die Bewegung des einteiligen mittleren Formkerns gegenüber der noch in der Dichtungsmanschette verbleibenden Formringe zu gewährleisten weist die Entformungsrichtung der verschiebbaren Formteile gegenüber der Senkrechten zur Querschnittsfläche der Öffnung auf der Seite der Vorderwand einen Winkel auf.

Hierzu ist es zweckmäßig, dass die Entformungsrichtung dem axialen Verlauf des rohrförmigen Zwischenstücks der Dichtungsmanschette entspricht. Somit wird verhindert, dass ein noch in der Dichtungsmanschette eingesetzter Formring, beispielsweise der untere äußere Formring zur Bereitstellung der Kontur des äußeren Verlaufs der Schwingfalte, den in Entformungsrichtung bewegten mittleren Formkern sperrt.

In zweckmäßiger Weise beträgt der Winkel zwischen der Entformungsrichtung und der Senkrechten zum Verlauf der Querschnittsfläche der Dichtungsmanschette zwischen 5 und 20 Grad. Der Winkel ist jedoch abhängig vom Verlauf des rohrförmigen Zwischenstücks, das die nichtfluchtenden Öffnungen der beiden Befestigungsabschnitte miteinander verbindet.

Wenn in einer weiteren Ausführungsform das rohrförmige Zwischenstück der Dichtungsmanschette der Form eines schrägen Zylinders entspricht, ist es zweckmäßig, dass die Entformungsrichtung dem axialen Verlauf dieses schrägen Zylinders entspricht.

In einer anderen Ausführungsform kann der mittlere Bereich der Dichtungsmanschette die Form eines schiefen Kegelstumpfes aufweisen. In diesem Fall ist es zweckmäßig, dass die Entformungsrichtung dem axialen Verlauf dieses schrägen Kegelstumpfes entspricht.

In einer weiteren zweckmäßigen Ausgestaltung entspricht die Entformungsrichtung parallel dem nach innen gerichteten Verlauf des rohrförmigen Zwischenstücks. Auch in dieser Ausgestaltung ist sichergestellt, dass die Formkerne und Formringe nach einer vorgegebenen Reihenfolge in Entformungsrichtung bewegt werden können.

Es ist weiterhin vorteilhaft, den unteren äußeren Formring und/oder den oberen äußeren Formring jeweils mehrteilig, zumindest in zwei Abschnitten zu gestalten, wobei die einzelnen Teile oder Abschnitte während der Entformung der Dichtungsmanschette im rechten Winkel zur Entformungsrichtung nach außen bewegt werden.

Ein Ausführungsbeispiel der Erfindung ist in den Zeichnungen rein schematisch dargestellt und wird nachfolgend näher beschrieben. Es zeigen
- Figur 1: schematisch eine zusammengefügte Form zur Verwendung beim erfindungsgemäßen Verfahren und
- Figur 2: schematisch eine zusammengefügte Form, wie sie bereits vorbekannt ist.

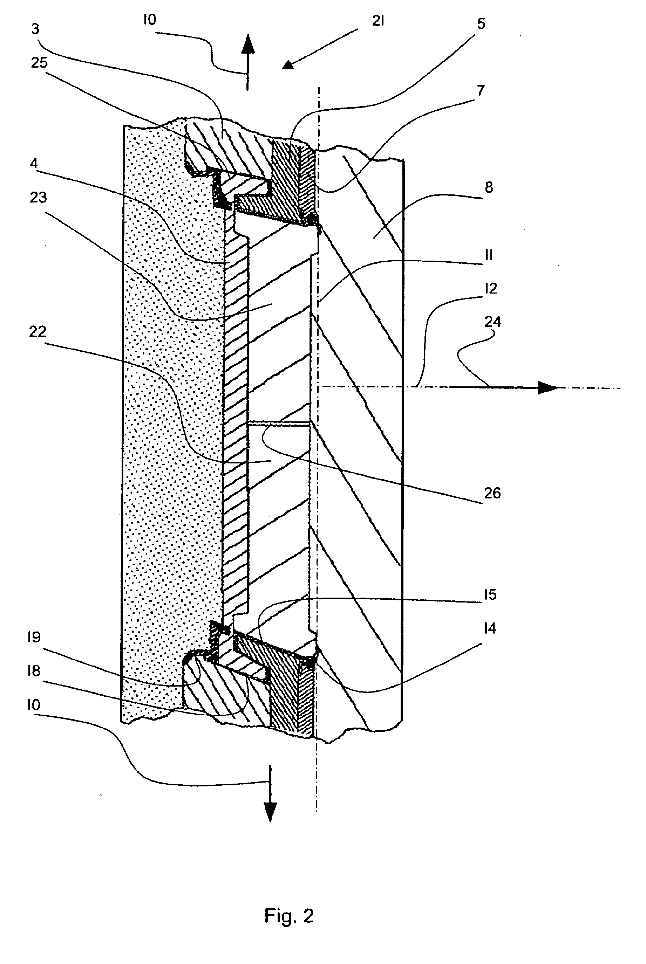

Zum Herstellen einer elastischen Dichtungsmanschette wird, wie in Fig. 2 dargestellt, in bekannter Weise eine Form 21 verwendet, in die Kunststoffmaterial, vorzugsweise ein elastomerer Kunststoff wie EPDM, eingespritzt wird. Nach dem Aushärten bzw. Vulkanisieren des eingespritzten Materials ist die noch in der Form verharrende Dichtungsmanschette in der Weise elastisch, wie sie für den Gebrauch zur Bereitstellung der Verbindung zwischen der nicht dargestellten Türöffnung in der Vorderwand und der nicht dargestellten Einfüllöffnung des Laugenbehälters in einer frontbeschickbaren Waschmaschine vorgesehen ist. Bei Waschmaschinen aktueller Bauart ist die Türöffnung gegenüber der Einfüllöffnung des Laugenbehälters achsparallel oder in einem Winkel zueinander angeordnet. Aus diesem Grunde musste die Dichtungsmanschette dieser vorgegebenen Anordnung angepasst werden, so dass sich für die Verbindung zwischen Türöffnung und Laugenbehälteröffnung eine unsymmetrisch geformte Dichtungsmanschette am besten eignet. Unsymmetrisch bedeutet, dass der axiale Verlauf des inneren Umfangs des mittleren Abschnitts 15 der Dichtungsmanschette schräg ist und somit etwa einem schiefen Zylinder oder einem schiefen Kegelstumpf entspricht. Um eine zuverlässige und möglichst schonende Entformung zu gewährleisten, ist die Form 21 aus mehreren beweglichen Teilen aufgebaut.

Eine Basisplatte 2 dient zur Bereitstellung der inneren Kontur des zweiten Befestigungsabschnitts 19 für die Befestigung der Dichtungsmanschette an der Öffnungskante des Laugenbehälters. Der auf der Basisplatte aufgesetzte untere äußere Formring 3 stellt die äußere Kontur des zweiten Befestigungsabschnitts 19 und der Kontur des äußeren Verlaufs der Schwingfalte 18 bereit. Dieser Formring 3 ist vorzugsweise in seinem Umfang abschnittsweise aufgeteilt, wobei die einzelnen Abschnitte in Richtung 10 radial nach außen aus der Form heraus bewegt werden. Ein Formkern 4 stellt die Kontur der Schwingfalte im inneren Bereich bereit. Ein Faltenformring 5 bestimmt die Kontur der Schwingfalte in einem Teilbereich und die äußere Kontur des mittleren Bereichs 15. Dieser Ring kann nicht radial nach außen bewegt werden, da der formbestimmende Teil des ersten mittleren Formkerns 22 diese Bewegung sperrt. Ein zweiteilig aufgebauter mittlerer Formkern 22 und 23 stellt die innere Kontur des mittleren Bereichs 15 bereit. Der obere äußere Formring 7 dient zur Bereitstellung der äußeren Kontur des ersten Befestigungsabschnitts 14. Mit dem ersten Befestigungsabschnitt 14 wird die Dichtungsmanschette an der Vorderwand einer Waschmaschine verbunden und befestigt. Der obere äußere Formring 7 ist vorzugsweise in seinem Umfang abschnittsweise aufgeteilt, wobei die einzelnen Abschnitte in Richtung 10 radial nach außen aus der Form heraus bewegt werden. Die Abdeckplatte 8 stellt einen Teilbereich der äußeren Kontur des ersten Befestigungsabschnitts 14 bereit und hält alle Formteile im zusammengefügten Zustand zusammen.

Nach dem Einspritzen des Kunststoffmaterials, beispielsweise einem elastomeren Kunststoff EPDM oder einem Kautschukmaterial, folgt nach dem Aushärten bzw. Vulkanisieren zur Entnahme der fertigen Dichtungsmanschette der Schritt des Entformens. Hierzu wird im ersten Schritt die Abdeckplatte in Entformungsrichtung 24 wegbewegt. Anschließend werden die Abschnitte des oberen äußeren Formrings 7 in Richtung 10 nach außen bewegt. Danach wird der erste Teil 22 des mittleren Formkerns in Entformungsrichtung 24 aus der Form heraus bewegt. Dabei kann während der Bewegung ein nach innen überstehender Rand des ersten Befestigungsabschnitts 14 leicht aufgeweitet werden, was jedoch aufgrund der Elastizität der ausgehärteten Dichtungsmanschette unerheblich ist. Sobald der erste mittlere Formkern 22 die Form verlassen hat, wird der Faltenformring 5 aus der Form in Entformungsrichtung 24 heraus bewegt. Hierbei wird während der Bewegung ein Abschnitt des mittleren Bereichs der Dichtungsmanschette leicht nach innen gedrückt, was jedoch problemlos möglich ist, da der erste mittlere Formkern 22 diese Bewegung nicht mehr behindern oder sperren kann. Anschließend wird der zweite mittlere Formkern 23 aus der Form in Entformungsrichtung 24 heraus bewegt. Hierbei wird ein Abschnitt mittleren Bereichs der Dichtungsmanschette leicht nach außen gedrückt, was jedoch problemlos möglich ist, da der Faltenformring 5 diese Bewegung nicht mehr behindern oder sperren kann. Danach wird der untere äußere Formring 3 dadurch entfernt, dass die einzelnen Abschnitte in radialer Richtung 10 nach außen bewegt werden. Im Zuge des letzten Entformungsschritts wird der Faltenformkern 4 in Entformungsrichtung 24 von der Basisplatte 2 gelöst, wobei die Dichtungsmanschette mitbewegt wird. Da der faltenbalgförmige Bereich18 der Dichtungsmanschette den formgebenden Teil 25 des Faltenformkerns 4 umschließt, besteht ein gewisser Festsitz der Dichtungsmanschette auf dem Faltenformkern 4. Nach dem Trennen des Faltenformkerns 4 kann die Dichtungsmanschette durch sogenanntes Überreißen, bei dem kurzzeitig der faltenbalgförmige Bereich 18 gedehnt wird, von dem Faltenformkern 4 abgezogen bzw. entfernt werden. Da während des Spritzgießens Material in die Fugen zwischen benachbarten Formteilen eindringt, entstehen nach dem Aushärten an diesen Stellen Formtrenngrate, die jedoch keinen negativen Einfluss auf die Festigkeit der Dichtungsmanschette haben. Sie können bedenkenlos nachträglich abgeschnitten werden. Da der mittlere Formkern zweiteilig ausgeführt ist, entsteht in der Fuge 26 zwischen dem ersten mittleren Formkern 22 und dem zweiten mittleren Formkern 23 nach dem Spritzgießen ein Formtrenngrat im inneren, sichtbaren Bereich des rohrförmigen Zwischenstücks 15.

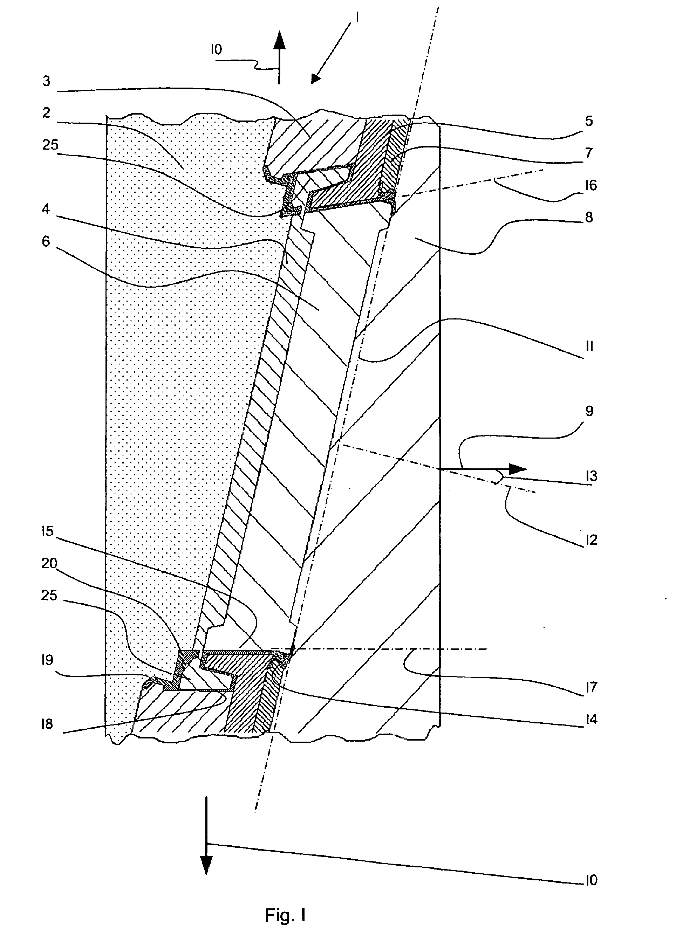

In Fig. 1 ist eine Form dargestellt, mit welcher im Zusammenwirken mit dem erfinderischen Verfahren ein Formtrenngrat im inneren sichtbaren Bereich des rohrförmigen Zwischenstücks 15 der Dichtungsmanschette vermieden wird. Die Form 1 besteht im wesentlichen aus den gleichen Formteilen, wie die bereits bekannte Form 21, wobei der mittlere Formkern 6 einteilig bzw. einstückig ausgeführt ist. Dies gilt vorzugsweise für den formbildenden Randbereich. Die Entformungsrichtung 9 für die formbildenden Teile weist gegenüber der Senkrechten 12 zur Querschnittsfläche 11 der Dichtungsmanschette einen Winkel 13 auf. Dieser Winkel ist so gewählt, dass eine Bewegung des mittleren Formkerns 6 in Entformungsrichtung 9 möglich ist, während der Faltenformring 5 noch in seiner formbildenden Position verharrt. Wenn das rohrförmige Zwischenstück 15 der Form eines schiefen Zylinders entspricht, ist die Entformungsrichtung 9 dem axialen Verlauf dieses schiefen Zylinders eingestellt. Wenn das rohrförmige Zwischenstück 15 der Form eines schiefen Kegelstumpfes entspricht, liegt die Entformungsrichtung 9 auf der Achse, die den Verlauf des schiefen Kegelstumpfes bestimmt. Bei einem rohrförmigen Zwischenstück 15 in Form eines schiefen Kegelstumpfes ist es jedoch notwendig, dass der Durchmesser der Öffnung 11 auf der Seite der Entformungsrichtung 9 größer ist, als der Durchmesser der Öffnung auf der gegenüberliegenden Seite. Der Verlauf des rohrförmigen Zwischenstücks 15 ist auf der im bestimmungsgemäßen Einbauzustand unteren Seite nach innen gerichtet 17, wobei der Verlauf auf der im bestimmungsgemäßen oberen Seite nach außen 16 gerichtet ist. Hierbei kann die Entformungsrichtung 9 auch parallel dem nach innen gerichteten Verlauf 17 des rohrförmigen Zwischenstücks 15 entsprechen.

### Bezugszeichenliste

- 1.: Form
- 2.: Basisplatte
- 3.: unterer äußerer Formring
- 4.: Faltenformkern
- 5.: Faltenformring
- 6.: mittlerer Formkern,
- 7.: oberer äußerer Formring
- 8.: Abdeckplatte
- 9.: Entformungsrichtung
- 10.: Entformungsrichtung radial
- 11.: Verlauf der Querschnittsfläche der Öffnung
- 12.: Senkrechte zur Querschnittsfläche
- 13.: Winkel zwischen Entformungsrichtung und Senkrechten zur Querschnittsfläche
- 14.: erster Befestigungsabschnitt
- 15.: ebener Bereich, rohrförmiges Zwischenstück
- 16.: erster Verlauf der Wandung des mittleren Bereichs auf einer ersten Seite
- 17.: Verlauf der Wandung des mittleren Bereichs auf einer zweiten Seite
- 18.: Schwingfalte
- 19.: zweiter Befestigungsabschnitt
- 20.: Fortsatz
- 21.: vorbekannte Form
- 22.: erster mittlerer Formkern
- 23.: zweiter mittlerer Formkern
- 24.: Entformungsrichtung für vorbekannte Form
- 25.: formgebender Teil des Faltenformkerns
- 26.: Fuge

## Patentansprüche

1. Verfahren zur Herstellung einer Dichtungsmanschette zur Anordnung zwischen der Öffnung in der Vorderwand und der Einfüllöffnung im Laugenbehälter einer frontbeschickbaren Waschmaschine, wobei die Öffnung in der Vorderwand nicht fluchtend mit der Einfüllöffnung im Laugenbehälter angeordnet ist, und wobei die Dichtungsmanschette eine Schwingfalte (18) und ein ebenes rohrförmiges Zwischenstück (15) besitzt, welches einem schrägen Zylinder oder einem schrägen Kegelstumpf entspricht, unter Verwendung einer mehrteiligen Form (1) mit einer Basisplatte (2), Formkernen (4,6) und Formringen (3,5,7), und mit den Verfahrensschritten
- Einspritzen eines elastomeren Materials in die mehrteilige Form (1),
- Entfernen einzelner Formkerne (4,6) und Formringe (3,5,7) aus der Form (1) in einer vorgegebenen Reihenfolge nach dem Aushärten oder Vulkanisieren des elastomeren Materials, wobei die Reihenfolge durch die Anordnung der Formkerne und Formringe vorgegeben ist,
wobei,
- zumindest ein einteilig ausgeführter mittlerer Formkern (6) im Bereich des ebenen rohrförmigen Zwischenstücks (15) der Dichtungsmanschette beim Entfernen aus der Form (1) in Entformungsrichtung (9) verschoben wird, wobei die Entformungsrichtung (9) gegenüber der Senkrechten (12) zum Verlauf der Querschnittsfläche (11) der Öffnung auf der Seite der Vorderwand einen Winkel (13) aufweist und
- der auf der Basisplatte (2) aufgesetzte Formring (3) in seinem Umfang abschnittsweise aufgeteilt ist und die einzelnen Abschnitte radial nach außen aus der Form bewegt werden.

2. Verfahren nach Anspruch 1.
**dadurch gekennzeichnet,**
**dass** die Entformungsrichtung (9) dem axialen Verlauf des rohrförmigen Zwischenstücks (6) der Dichtungsmanschette entspricht.

3. Verfahren nach Anspruch 1 oder 2,
**dadurch gekennzeichnet,**
**dass** der Winkel (13) zwischen der Entformungsrichtung (9) und der Senkrechten (12) zum Verlauf der Querschnittsfläche (11) der Öffnung der Dichtungsmanschette auf der Seite der Vorderwand zwischen 5 und 20 Grad beträgt.

4. Verfahren nach einem der Ansprüche 1 bis 3,
**dadurch gekennzeichnet,**
**dass** die Entformungsrichtung (9) dem axialen Verlauf eines schrägen Zylinders des mittleren Bereichs (6) der Dichtungsmanschette entspricht.

5. Verfahren nach einem der Ansprüche 1 bis 3,
**dadurch gekennzeichnet,**
**dass** die Entformungsrichtung (9) dem axialen Verlauf eines schrägen Kegelstumpfes des mittleren Bereichs (6) der Dichtungsmanschette entspricht.

6. Verfahren nach einem der Ansprüche 1 bis 5,
**dadurch gekennzeichnet,**
**dass** die Entformungsrichtung (9) parallel dem nach innen gerichteten Verlauf (17) des rohrförmigen Zwischenstücks (15) entspricht.

7. Verfahren nach einem der Ansprüche 1 bis 6,
**dadurch gekennzeichnet,**
**dass** ein unterer äußerer Formring (3) aus zumindest zwei Abschnitten besteht, die während der Entformung der Dichtungsmanschette im rechten Winkel zur Entformungsrichtung (9) nach außen (10) bewegt werden.

8. Verfahren nach einem der Ansprüche 1 bis 6,
**dadurch gekennzeichnet,**
**dass** ein oberer äußerer Formring (7) aus zumindest zwei Abschnitten besteht, die während der Entformung der Dichtungsmanschette im rechten Winkel zur Entformungsrichtung (9) nach außen (10) bewegt werden.

## Claims

1. Method for producing a sealing sleeve to be disposed between the opening in the front wall and the fill opening in the washing liquid tub of a front-loadable washing machine, wherein the opening in the front wall is disposed so as not to be in alignment with the fill opening in the washing liquid tub, and wherein the sealing sleeve has a pivoting fold (18) and a planar, tubular intermediate piece (15), which corresponds to an inclined cylinder or to an inclined frustum, by using a multi-part mould (1) with a base plate (2), mould cores (4, 6) and mould rings (3, 5, 7), and the said method including the method steps
- injecting an elastomer material into the multi-part mould (1),
- removing individual mould cores (4,6) and mould rings (3, 5, 7) from the mould (1) in a predetermined sequence once the elastomer material has hardened or vulcanised, wherein the sequence is predetermined by the disposition of the mould cores and mould rings,
wherein
- at least one one-piece central mould core (6), when being removed from the mould (1), is displaced in the mould removal direction (9) in the region of the planar tubular intermediate piece (16) of the sealing sleeve, wherein the mould removal direction (9) is at an angle relative to the vertical (12) to the course of the cross-sectional face (11) of the opening on the side of the front wall and
- the circumference of the mould ring (3) placed on the base plate (2) is divided into sections and the individual sections are moved radially outwards out of the mould.

2. Method according to claim 1, **characterised in that** the mould removal direction (9) corresponds to the axial course of the tubular intermediate piece (6) of the sealing sleeve.

3. Method according to claim 1 or 2, **characterised in that** the angle (13) between the mould removal direction (9) and the vertical (12) to the course of the cross-sectional face (11) of the opening of the sealing sleeve on the side of the front wall is between 5 and 20 degrees.

4. Method according to one of claims 1 to 3, **characterised in that** the mould removal direction (9) corresponds to the axial course of an inclined cylinder of the central region (6) of the sealing sleeve.

5. Method according to one of claims 1 to 3, **characterised in that** the mould removal direction (9) corresponds to the axial course of an inclined frustum of the central region (6) of the sealing sleeve.

6. Method according to one of claims 1 to 5, **characterised in that** the mould removal direction (9) corresponds parallel to the inwardly directed course (17) of the tubular intermediate piece (15).

7. Method according to one of claims 1 to 6, **characterised in that** a bottom outermost mould ring (3) is produced from at least two sections, which during the removal from the mould of the sealing sleeve are moved outwards at right angles to the mould removal direction (9).

8. Method according to one of claims 1 to 6, **characterised in that** a top outermost mould ring (7) is produced from at least two sections, which during the removal from the mould of the sealing sleeve are moved outwards at right angles to the mould removal direction.

## Revendications

1. Procédé de fabrication d'un manchon d'étanchéité à disposer entre l'ouverture de la paroi avant et l'ouverture de remplissage de la cuve de lavage d'un lave-linge à chargement frontal, sachant que l'ouverture de la paroi avant n'est pas disposée en alignement avec l'ouverture de remplissage de la cuve de lavage, et sachant que le manchon d'étanchéité possède un soufflet oscillant (18) et une pièce intermédiaire (15) tubulaire et plane, qui correspond à un cylindre oblique ou à un cône tronqué oblique, en utilisant un moule (1) en plusieurs parties avec une plaque de base (2), des noyaux de moule (4, 6) et des bagues de moule (3, 5, 7), et avec les étapes de procédé suivantes :
- injection d'un matériau élastomère dans le moule (1) en plusieurs parties,
- enlèvement du moule (1) des différents noyaux de moule (4, 6) et bagues de moule (3, 5, 7) dans un ordre de succession prédéfini à la suite du durcissement ou de la vulcanisation du matériau élastomère, sachant que l'ordre de succession est prédéfini par la disposition des noyaux et bagues de moule,
sachant que
- au moins un noyau de moule central (6) réalisé d'un seul tenant est, dans la région de la pièce intermédiaire (15) tubulaire et plane du manchon d'étanchéité, déplacé dans la direction de démoulage (9) lors de l'enlèvement du moule (1), sachant que la direction de démoulage (9) présente un angle (13) par rapport à la perpendiculaire (12) à l'allure de l'aire de section (11) de l'ouverture du côté de la paroi avant, et
- la bague de moule (3) placée sur la plaque de base (2) est divisée par tronçons sur sa circonférence et les tronçons individuels sont déplacés hors du moule radialement vers l'extérieur.

2. Procédé selon la revendication 1, **caractérisé en ce que** la direction de démoulage (9) correspond à l'allure axiale de la pièce intermédiaire tubulaire (6) du manchon d'étanchéité.

3. Procédé selon la revendication 1 ou 2, **caractérisé en ce que** l'angle (13) entre la direction de démoulage (9) et la perpendiculaire (12) à l'allure de l'aire de section (11) de l'ouverture du manchon d'étanchéité du côté de la paroi avant est compris entre 5 et 20 degrés.

4. Procédé selon l'une des revendications 1 à 3, **caractérisé en ce que** la direction de démoulage (9) correspond à l'allure axiale d'un cylindre oblique de la région centrale (6) du manchon d'étanchéité.

5. Procédé selon l'une des revendications 1 à 3, **caractérisé en ce que** la direction de démoulage (9) correspond à l'allure axiale d'un cône tronqué oblique de la région centrale (6) du manchon d'étanchéité.

6. Procédé selon l'une des revendications 1 à 5, **caractérisé en ce que** la direction de démoulage (9) correspond en parallèle à l'allure dirigée vers l'intérieur (17) de la pièce intermédiaire tubulaire (15).

7. Procédé selon l'une des revendications 1 à 6, **caractérisé en ce qu'**une bague moulée extérieure inférieure (3) est constituée d'au moins deux parties qui, pendant le démoulage du manchon d'étanchéité, sont déplacées vers l'extérieur (10) à angle droit de la direction de démoulage (9).

8. Procédé selon l'une des revendications 1 à 6, **caractérisé en ce qu'**une bague moulée extérieure supérieure (7) est constituée d'au moins deux parties qui, pendant le démoulage du manchon d'étanchéité, sont déplacées vers l'extérieur (10) à angle droit de la direction de démoulage (9).
